# EUROPEAN PATENT APPLICATION

(11) **EP 1 566 582 A1**
(43) Date of publication of application: **24.08.2005**
(21) Application number: 05001647.6
(22) Date of filing: 27.01.2005
(51) Int. Cl.: F16J 15/12, C08L 27/16, C08K 3/04, C08K 3/22, C09D 127/16

(54) **Fluoroelastomer gasket compositions**

(30) Priority: 20.02.2004 US 783770
(71) Applicant: Carl Freudenberg KG, 69469 Weinheim (DE)
(72) Inventor: Kong, Yingjie, East Lyme, CT 06333 (US); Yuan, Hui Liang, LaGrange, Georgia 30240 (US); Walker, Francis, Joseph, Tecumseh, MI 49286 (US)

(57) **Abstract**

A gasket coating admixture of fluoroelastomer particulate, inert particulate, curing agent, and metallic oxide reduction-agent optionally admixed with any of microspheres, PTFE particles, and ferric oxide is applied to a carrier and cured to provide a coating for components such as gaskets. The admixtures provide a basis for designed cured coatings having internally differentiated regions interbonded by cured elastomer. The coating admixture has especial value in coating gasket carriers to form single component gaskets for internal combustion engines or in coating transmission separator plate interfaces.

## Description

This invention relates to gasket compositions. In particular, the present invention relates to compositions comprising certain elastomers for coating a gasket substrate.

Gaskets provide a seal between two mating components. Typically, the two components have respective (essentially coplanar or flat) mating surfaces essentially adjacently disposed except for the intervening gasket. In this regard and in the absence of the gasket, the mating surfaces frequently do not press together ideally without some voids being created between the two surfaces, and these voids can establish undesired leakage pathways between the two components. The gasket compensates for this by providing a reasonably flexible interface to fill any voids between the surfaces and also, in many cases, to provide a compressed mechanical spring between the two mating surfaces. Bolts or similar fasteners compressively connect (mate) the two components together and compress the gasket (to form a compressed spring seal) between the mating surfaces.

One common application for gaskets is to provide the interface in mating an engine block to a cylinder head of an internal combustion (IC) engine; this is considered to be one of the most difficult gasket applications because of the temperatures and pressures created on the gasket during engine operation. Another common application is in mating of transmission separation plates. Intake manifolds and thermostats are other examples of components mated to an engine with a gasket. IC engine manifold gaskets are typically formed with ports for accommodating flow of fluids between the intake manifold and the cylinder head. In cylinder head gasket use during engine operation, combustion and exhaust gases are a source for lateral stress conditions to the gasket of greater than 1,000 Ibs per square inch at a temperature of 600° Fahrenheit or greater. These high temperatures and high pressures define the performance environment for the gasket, which is compressed between the engine block and head with a force of at least 10,000 pounds per square inch to contain the hot gases.

Hot oil defines a further source of chemical solvent stress to gasket materials. While of concern in IC cylinder head gaskets, this issue is of especial interest in transmission gaskets. When the engine ceases operating, the materials cool substantially, especially in winter environments, with attendant contractive stresses within the materials and expansive stresses from embedded frozen moisture at low temperatures. Thus, internal combustion engine gaskets are frequently exposed to a wide range of temperatures, pressures, and corrosive materials during normal use.

Cylinder head gaskets are also frequently provided with an embossed resilient bead, for providing an essentially leak-proof seal. Another common feature of these gaskets is a stopper - a stiff metal strip providing a primary thickness offset in the gasket, which both provides a primary seal and also frequently protects softer auxiliary bead seals from over compression between the two mating surfaces.

While many gaskets are made of several different pieces stacked in a multilayer orientation, minimization of the number of parts needed for an engine is an ongoing goal. Single piece gaskets are therefore desirable. Many gaskets require seals applied as coatings rather than as separate gasket-form layers. In highly stressful operational environments, a gasket coating's ability to provide satisfactory adhesion to a (usually metal) substrate and also to persevere in robust condition during use is, therefore, most important. Conformable coatings, however, lose their adhesion over time under their operational high loading and vibration, and an improved gasket is needed to provide a long-term robust interface between the engine block and cylinder head.

### SUMMARY

The invention provides a gasket coating comprising:
(a) fluoroelastomer particulate derived from vinylidene-fluoride, hexafluoropropene, and tetrafluoroethylene, where the fluoroelastomer has a Mooney viscosity from about 25 to about 75, fluorine from about 65 to about 69 atomic weight percent, at least 90 weight percent fluoroterpolymer, and halogenated crosslink sites;
(b) inert particulate from about 10 to about 50 parts per 100 parts by weight of the fluoroelastomer particulate, where the inert particulate has a particle size less than about 250 mesh;
(c) curing agent from about 0.5 to about 20 parts per 100 parts by weight of the fluoroelastomer particulate, where the curing agent crosslinks the fluoroelastomer particulate to generate cured fluoroelastomer and hydrogen ions; and
(d) metallic oxide reduction-agent particulate from about 5 to about 50 parts per 100 parts by weight of the fluoroelastomer particulate, where the metallic oxide reduction-agent particulate has a particle size less than about 250 mesh and a BET (Brunauer, Emmett, and Teller method) surface area from about 40 to about 70 square meters per gram.

In further aspects of the invention, the gasket coating composition additionally comprises such materials as microspheres, PTFE particulates, titanium dioxide, and ferric oxide. The present invention also provides single component gaskets comprising the compositions of this invention.

It has been found that the compositions of this invention afford advantages over gasket compositions among those known in the art, including one or more of excellent conformability, good high temperature robustness, excellent resistance to oil, electrolytic, and moisture attack, strength with resiliency, abrasion resistance, solvent resistance, good tensile and elongation properties, reduced cost, low permeation rate, and good adhesion to metals, graphite, composites, and other materials having a high surface tension.

Further areas of applicability will become apparent from the detailed description provided hereinafter. It should be understood that the detailed description and specific examples, while indicating embodiments of the invention, are intended for purposes of illustration only and are not intended to limit the scope of the invention.

### BRIEF DESCRIPTION OF THE DRAWINGS

The present invention will become more fully understood from the detailed description and the accompanying drawings of Figures 1 to 13.

Figure 1 depicts one laterally-extending side of one exemplary gasket, with the gasket being adapted for sealing between a cylinder head and a cylinder block.

Figure 2 is a partial cross-sectional view, taken along line 2-2 of Figure 1.

Figure 3 is a partial cross-sectional view, illustrating the exemplary gasket of Figure 1 in a partially compressed condition.

Figure 4 shows a simplified partial cross-sectional view of a gasket carrier section with a cured coating of having a microsphere enhanced region, two other regions of cured coating without microsphere enhancement, and a continuous elastomer phase.

Figure 5 presents a simplified partial cross-sectional view of a gasket carrier section with a flexible raised elastomeric bead in a cured coating reinforced by a generally concave surface portion in the gasket carrier.

Figure 6 presents a simplified partial cross-sectional view of a gasket carrier section with a raised rigid bead in a cured coating reinforced by a generally concave surface portion in the gasket carrier.

Figure 7 is a partial cross-sectional view of an alternate gasket according to the present invention, which is similar to that of Figures 1 and 2, except that the flexible stopper portion is coated but not filled with resilient material on its concave side.

Figure 8 is a partial cross-sectional view, similar to that of Figures 2 and 7, but illustrating yet another alternate embodiment of a gasket according to the present invention, wherein the flexible stopper portion has a generally serpentine, "S shaped" cross-sectional shape, essentially forming multiple flexible stoppers, with the concave portions of the flexible stopper portion alternatively being merely coated with the resilient material or at least partially filled with the resilient material.

Figure 9 is a partial cross-sectional view similar to that of Figures 2, 7, and 8, but illustrating still another alternate embodiment of a gasket according to the present invention, with the inner seal portion extending in a laterally and longitudinally inclined or angled direction, and with the flexible stopper portion being alternately merely coated with the resilient material or at least partially filled with the resilient material.

Figures 10a and 10b illustrate a partial perspective view and a partial cross-sectional view, respectively, of another alternate embodiment of the present invention, wherein the inner sealing portion of the carrier is substantially separated from the remainder of the carrier member but interconnected and held in place by two or more connecting struts.

Figures 11a and 11b are similar to those of Figures 10a and 10b, respectively, but illustrating yet another alternate embodiment of the present invention, wherein the inner sealing portion of the carrier member is separate from the remainder of the carrier member, but with the inner sealing portion and the intermediate carrier portion being interconnected by one or more "living hinge" sections of the resilient material.

Figure 12 is a partial schematic cross-section, conceptually illustrating other examples of other applications of the present invention.

Figure 13 shows a simplified partial cross-sectional view of a gasket carrier section with a cured fluoroelastomer coating having a microsphere enhanced region and a region without microsphere enhancement, where an additional rigid region is encapsulated between the cured (crosslinked) coating and the carrier so that the rigid region provides an elastomer-covered stopper portion in the gasket.

It should be noted that the figures set forth herein are intended to exemplify the general characteristics of an apparatus, materials and methods among those of this invention, for the purpose of the description of such embodiments herein. These figures may not precisely reflect the characteristics of any given embodiment, and are not necessarily intended to define or limit specific embodiments within the scope of this invention.

### DESCRIPTION

In use, a gasket represents an intersection of considerations in both mechanical design and in materials design. In this regard, improvements in materials frequently are intertwined with improvements in mechanical design. When a component, such as a gasket, is made of a basic material coated with at least one additional material, the process of joining the materials together is also of interest. The following discussion will begin with a focus on some new materials, shift in focus to a consideration of mechanical design considerations benefiting from the new materials, and then focus on process considerations related to the production of the new materials and their use.

The following definitions and non-limiting guidelines must be considered in reviewing the description of this invention set forth herein.

The headings (such as "Introduction" and "Summary") used herein are intended only for general organization of topics within the disclosure of the invention, and are not intended to limit the disclosure of the invention or any aspect thereof. In particular, subject matter disclosed in the "Introduction" may include aspects of technology within the scope of the invention, and may not constitute a recitation of prior art. Subject matter disclosed in the "Summary" is not an exhaustive or complete disclosure of the entire scope of the invention or any embodiments thereof.

The citation of references herein does not constitute an admission that those references are prior art or have any relevance to the patentability of the invention disclosed herein. All references cited in the Description section of this specification are hereby incorporated by reference in their entirety.

The description and specific examples, while indicating embodiments of the invention, are intended for purposes of illustration only and are not intended to limit the scope of the invention. Moreover, recitation of multiple embodiments having stated features is not intended to exclude other embodiments having additional features, or other embodiments incorporating different combinations the stated of features.

As used herein, the words "preferred" and "preferably" refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the word 'include," and its variants, is intended to be non-limiting, such that recitation of items in a list is not to the exclusion of other like items that may also be useful in the materials, compositions, devices, and methods of this invention.

The present invention provides a gasket material, comprising a fluoroelastomer particulate derived from vinylidene-fluoride, hexafluoropropene, and tetrafluoroethylene. In one embodiment, the fluoroelastomer has a Mooney viscosity from about 25 to about 75, fluorine from about 65 to about 69 atomic weight percent, at least 90 weight percent fluoroterpolymer, and halogenated crosslink sites. In one embodiment, Viton™ B-600 (E. I. du Pont de Nemours & Co.) provides base elastomer particulate for the admixture. Depending upon the eventual time needed to dissolve the elastomer particulate into a solvent, the size of the elastomer particulate varies from a small granule to a small fragmentary chip of a couple of centimeters in length and/or width.

Inert particulate in a quantity (concentration) from about 10 to about 50 parts per 100 parts by weight of the fluoroelastomer particulate is also dispersed throughout the base elastomer particulate of the coating admixture. The inert particulate has particle size less than about 250 mesh (that is, a particle size which will pass through a screen of about 250 mesh). Particulates useful herein include those selected from the group consisting of calcium carbonate, carbon black, graphite, fumed silica (silica fume), and kaolin, and combinations thereof. In one embodiment, inert particulates are added to the composition for controlling properties such as creep, conformability, bonding strength, and pencil hardness in the composition after it has been cured. In one embodiment, carbon black is added to provide for a pencil hardness of greater than 3H (ASTM D-3363 "Standard Test Method For Film Hardness By Pencil Test") in a gasket seal after the admixture has cured.

The composition also comprises a curing agent at a concentration from about 0.5 to about 20 parts per 100 parts by weight of the fluoroelastomer particulate. In this regard, the curing agent accelerates crosslinking of the fluoroelastomer as the admixture cures to provide a continuous elastomer phase and also to release hydrogen ions into the curing admixture. In one embodiment, the composition comprises an amine curing agent providing a -C=N- group. In this regard, n,n'-dicinnamylidene-1,6-hexene is an especially preferred curing agent for bonding fluoroelastomer with fluorinated crosslinking sites where the cured elastomer will be used in high temperature applications. In some embodiments, hexamethylene diamine carbamate or ethylene diamine carbamate are amines functioning as the curing agent. Mixtures of any of n,n'-dicinnamylidene-1,6-hexene, hexamethylene diamine carbamate and ethylene diamine carbamate are used in yet other embodiments.

The composition also comprises a metallic oxide particulate in a concentration from about 5 to about 50 parts per 100 parts by weight of the fluoroelastomer. The metallic oxide particulate preferably has a particle size less than about 250 mesh, and is preferably in the admixture in sufficient quantity to combine with hydrogen ions (generated by the curing agent during curing of the admixture) while also being controlled in quantity and activity so that the crosslinking process will provide a cured coating having a bonding strength appropriate for desired gasket operating conditions. In this regard, the BET surface area of the metallic oxide particulate is from about 40 to about 70 m²/g. Preferred metallic oxide particulates include MgO, ZnO, and combinations thereof. An example of MgO particulate is Maglite™ Y (a moderately active magnesium oxide having a BET surface area from about 40 to about 70 m²/g for fluoroelastomer curing) made by The C.P. Hall Company of Chicago, Illinois.

With respect to the activity level of the metallic oxide reducing agent, in one embodiment a "diminished activity" metallic oxide reducing agent (having a BET surface area from about 40 to about 70 m²/g) provides utility in curing thin fluoroelastomer coatings (for example, without limitation, coatings applied as films having a thickness of less than about 200 microns) where hydrogen ions are generated during curing. In this regard, in one embodiment, the limited activity reduction agent maintains a sufficient hydrogen ion concentration in the curing elastomer such that the rate of crosslinking executes at a pace more aligned with diffusive migration of condensation products (such as, for example HF generated during crosslinking) from the film than would be the case if a "high activity" reducing agent were to be used and the hydrogen ion concentration was thereby kept to a very low concentration. In one embodiment, the paced crosslinking promoted by metallic oxide reducing agent with a BET surface area from about 40 to about 70 m²/g thereby enables "long" chains of fluoroelastomer polymer to be crosslinked within the elastomer as compared to the situation which is believed to occur with high activity reducing agents where a "lower" hydrogen ion concentration during crosslinking effectively drives the equilibrium conditions in the crosslinking reaction to sustain rapid crosslinking and promotes thereby a large number of "short" polymer chains. In one embodiment, the long elastomer chains facilitated with metallic oxide reducing agent with a BET surface area from about 40 to about 70 m²/g enable a very adherent bond to substrates to which the coating is applied (including substrates primed with a primer such as silane).

In one embodiment, the composition comprises metallic oxide particulates having a BET surface area from about 40 to about 70 square meters per gram with an amine curing agent such as n,n'-dicinnamylidene-1,6-hexene. In one embodiment, the metallic oxide particulate (with a BET surface area from about 40 to about 70 m²/g) is achieved with a blend of MgO in from about 1 to about 30 parts per 100 parts by weight of the fluoroelastomer particulate and, if ZnO is used, with ZnO in up to about 20 parts per 100 parts by weight of the fluoroelastomer particulate. In one embodiment where n,n'-dicinnamylidene-1,6-hexene is in about 8 parts per 100 parts by weight of the fluoroelastomer particulate, MgO is in about 9 parts per 100 parts by weight of the fluoroelastomer particulate, and ZnO is in about 10 parts per 100 parts by weight of the fluoroelastomer particulate.

In one embodiment, the composition comprises polytetrafluorinated ethylene (PTFE) particulates, preferably at a level of up to about 75 parts per 100 parts by weight of the fluoroelastomer particulate. The polytetrafluorinated ethylene particulate preferably has a mean particle size from about 10 to about 50 microns. The PTFE particles are preferably dispersed within the continuous cured fluoroelastomer, so that at least a two phase polymeric coating is provided. The PTFE particles help to reduce wear on the gasket from engine vibration, and they also augment release of the gasket during engine disassembly.

The compositions optionally comprise expandable microspheres, preferably having a mean particle size from about 0.5 to about 20 microns and preferably at a concentration of from about 0.5 to about 20 parts per 100 parts by weight of the fluoroelastomer particulate. The microspheres have shells comprising a polymer selected from the group consisting of any of polyvinyl chloride, polyvinylidene chloride, copolymers of polyvinyl chloride and polyvinylidene chloride, and combinations thereof. The microspheres respectively expand during curing to provide expanded microspheres in the cured coating.

The compositions optionally comprise microspheres preferably having a mean particle size from about 20 to about 120 microns and preferably at a concentration of from about 0.5 to about 20 parts per 100 parts by weight of the fluoroelastomer particulate. The microspheres have shells of any of polymer, ceramic, glass, and combinations thereof. These microspheres do not expand during curing.

The microspheres establish dispersed and sealed gaseous phases within the continuous cured fluoroelastomer, so that a foamed polymeric coating is provided. In this regard, localized regions of the coating can be engineered to have a foam attribute, and a designed coating is therefore enabled with differentiated regions interbonded with a continuous elastomer phase. In such embodiments, the microspheres thereby enable degrees of freedom (in concentration, size, and microsphere compositional specifics) for balancing properties related to flexibility, conformability, resiliency, and toughness in the cured coating.

The compositions of this invention optionally comprise ferric oxide, titanium oxide, or a mixture thereof, preferably at a concentration of from about 5 to about 25 parts per 100 parts by weight of the fluoroelastomer particulate. In one embodiment, ferric oxide, titanium oxide, or a mixture thereof is added to create an essentially rigid region in a gasket comprising a plurality of gasket layers or regions. The ferric oxide is also beneficial in providing a red colored identifying aspect to the gasket. In one such embodiment, fluoroelastomer composition of this invention without ferric oxide, titanium oxide, or a mixture thereof is first deposited on a metal substrate; this first layer of fluoroelastomer admixture is then dried, but not cured. The titanium dioxide is also beneficial in providing a white colored identifying aspect to the gasket. Fluoroelastomer admixture with ferric oxide, titanium oxide, or a mixture thereof (preferably having the same fluoroelastomer as used in the first layer) is then deposited on the dried first layer, and dried. Both layers are then cured. During the curing process, crosslinking occurs across the boundary between the two deposited layers so that a continuum of crosslinked fluoroelastomer is established in the cured coating. This approach enables a multi-region gasket seal having a rigid region integrated via continuously crosslinked fluoroelastomer polymer into an otherwise relatively flexible and metallically adhesive region. As will be further described herein, such a region enables a raised rigid bead (which, in one embodiment, provides an integrated stopper) to be provided in the derived gasket.

Wax particulate of from about .05 parts to about 5 parts per 100 parts by weight of the fluoroelastomer particulate is used in some embodiments to improve flow properties in mixing the admixture into a solvent for application to a substrate (such as metal or graphite) and to enhance particulate intermixing during mechanical agitation of the admixture. Examples of wax particulate include paraffin, carnaubra wax, polypropylene wax and combinations thereof.

In one embodiment, the composition is fluidized with solvent sufficient to provide an admixture viscosity from about 10,000 centipoises to about 500,000 centipoises. The solvent is preferably selected from the group consisting of ketones, alcohols, ester solvents, and combinations thereof. Preferred solvents include those selected from the group consisting of methyl isobutyl ketone, ethyl acetate, cellosolve acetate, sorbitol acetate, 3,5,5-trimethyl-3-cyclohexenene-1-one, cyclohexene-1-one, butyl cellulose acetate, methanol, ethanol, isopropyl alcohol, and mixtures thereof. In one embodiment, the solvent comprises a mixture of about 20 weight percent 3,5,5-trimethyl-3-cyclohexenene-1-one, about 20 weight percent cyclohexene-1-one, and about 60 weight percent butyl cellulose acetate.

In one embodiment, the present invention provides a gasket composition comprising:
(a) fluoroelastomer particulate derived from vinylidene-fluoride, hexafluoropropene, and tetrafluoroethylene, where the fluoroelastomer has a Mooney viscosity from about 25 to about 75, fluorine from about 65 to about 69 atomic weight percent, at least 90 weight percent fluoroterpolymer, and fluorinated crosslink sites;
(b) carbon black (having particles sized less than about 250 mesh) at a level of from about 10 to about 50 parts per 100 parts by weight of the fluoroelastomer particulate;
(c) polytetrafluorinated ethylene particulate (having a mean particle size from about 10 to about 50 microns) at a level of less than about 75 parts per 100 parts by weight of the fluoroelastomer particulate;
(d) n,n'-dicinnamylidene-1,6-hexene at a level of from about 0.5 to about 20 parts per 100 parts by weight of the fluoroelastomer particulate;
(e) metallic oxide particulate (having particles sized less than about 250 mesh and a BET surface area from about 40 to about 70 square meters per gram), at a level of from about 5 to about 50 parts per 100 parts by weight of the fluoroelastomer particulate, where MgO is in about 1 to about 30 parts per 100 parts by weight of the fluoroelastomer particulate and a remainder of ZnO from about 1 to about 20 parts per 100 parts by weight of the fluoroelastomer particulate;
(f) wax particulate at a level of from about .05 parts to about 5 parts per 100 parts by weight of the fluoroelastomer particulate; and
(g) solvent sufficient to provide an admixture viscosity from about 10,000 centipoises to about 500,000 centipoises, where the solvent is a blend of about 20 weight percent 3,5,5-trimethyl-3-cyclohexenene-1-one, about 20 weight percent cyclohexene-1-one, and about 60 weight percent butyl cellulose acetate.

In some embodiments, carbon black is present in about 35 parts, polytetrafluorinated ethylene particulate in about 5 parts, n,n'-dicinnamylidene-1,6-hexene in about 8 parts, MgO in about 9 parts, and ZnO in about 10 parts (all per 100 parts by weight of the fluoroelastomer particulate). In some of these embodiments, pre-expanded microspheres of between about 20 and 120 microns or expandable microspheres of from about 0.5 to about 20 microns in a concentration of about 8 parts per 100 parts by weight of the fluoroelastomer particulate are also present.

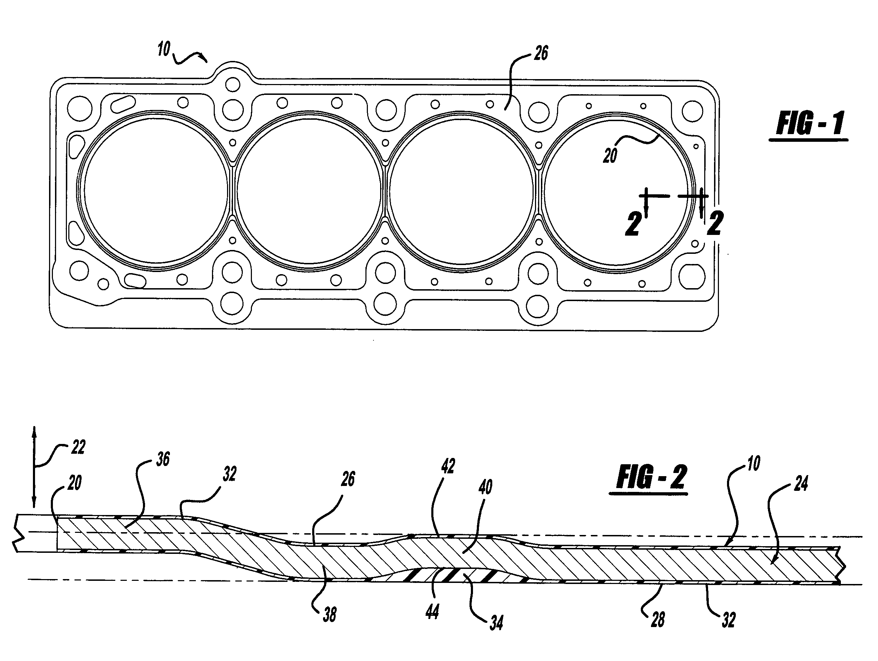

Turning now to the Figures and to mechanical design opportunities and considerations affiliated with the new fluoroelastomer particulate coating admixtures, Figures 1 through 13 illustrate various embodiments of a gasket according to the present invention. For purposes of example, only, Figures 1 through 3 and 7 through 11 are primarily directed toward a cylinder head gasket for sealing between mating surfaces of a cylinder head and a cylinder block on an internal combustion engine, gas compressor, or other similarly configured device. Similarly, components which might be mated or sealed include internal transmission separation plates. It should be noted, however, as will become apparent to those skilled in the art from the following description and claims, the principles of the present invention are equally applicable to other devices used in the automotive and non-automotive industrial areas, such as flanged piping components, enclosure or housing seals, piping system manifold seals, or other devices where proper sealing and flexibility is desired between opposed mating surfaces of two or more members.

Referring initially to Figures 1 through 3, one embodiment of the invention is represented by an exemplary gasket 10 for sealing between mating member 12 and a mating member 14, which are adapted to be matingly clamped together, with gasket 10 therebetween, such as by bolts or other conventional clamping devices. Mating members 12 and 14 have respective laterally-extending mating surfaces 13 and 15 surrounding respective openings 16 and 18, which are configured for conducting fluids between members 12 and 14 generally in a longitudinal direction 22.

Gasket 10 of Figure 1 includes a substantially rigid, but still flexible, carrier 24, laterally-extending gasket sides 26 and 28, a complete coating (or at least a localized coaling) of a much more flexible resilient sealing material 32, and a gasket opening 20 adapted to be laterally aligned with openings 16 and 18 of members 12 and 14 for longitudinal communication therebetween. Gasket 10 further includes a longitudinally-offset inner sealing portion 36, an intermediate portion 38, and a longitudinally offset flexible stopper 40.

Preferably, exemplary flexible stopper 40 (which can be characterized as a "full embossment") is longitudinally offset to a lesser extent than inner sealing portion 36 (which can similarly be characterized as a "half embossment"). Flexible stopper 40 is spaced away from gasket opening 20 (as well as from mating member openings 16 and 18), with the primary sealing component of the gasket (i.e., inner sealing portion 36) and intermediate portion 38 being between flexible stopper 40 and gasket opening 20. Flexible stopper 40 has a convex side 42 and a concave side 44, either of which can be oriented toward either of members 12 or 14.

Concave side 44 can optionally be coated with a resilient sealing material 32 such as a cured fluoroelastomer having microspheres as previously discussed, or concave side 44 is partially or completely filled with resilient sealing material 32 such as a cured fluoroelastomer having microspheres as previously discussed. Typically, although not necessarily in a given application, inner sealing portion 36 is more flexible than flexible stopper 40.

Examples of materials for carrier 40 can include semi-rigid synthetic or natural materials, metals or non-metals, with one example being composed of 301 stainless spring steel, full-hard, from about 0.15 mm to about 0.35 mm thick. Lower hardnesses of steel or other metals can of course also be used if a reduction in spring force is desired in a particular application. However, such softer materials may, over time, exhibit a decrease in recovery performance during unloading conditions, such as those resulting from relative movement between the mating members. Other metals or metal alloys may also have application in the present invention, such as hardened carbon steel, inconel, titanium, or still others known to those skilled in the art.

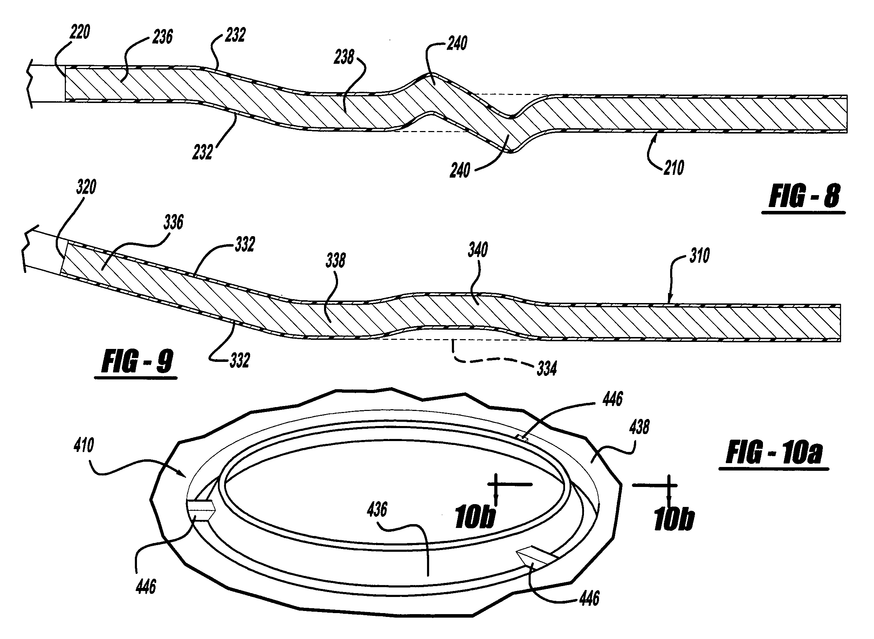

Examples of materials for resilient sealing material 32 in the illustrated example include cured fluoroelastomers having optional microspheres as previously discussed. The fluoroelastomer coating (ultimately cured to provide sealing material 32) is, in one embodiment of an application process, applied to the carrier material and cured prior to forming the carrier itself. In an alternative application process, the fluoroelastomer coating is coated onto the carrier after it is formed; or it is coated onto localized areas as appropriate, such as those adjacent gasket opening 20 or other areas adjacent fluid openings (e.g., for lubricant, for cooling, etc.), bolt holes, or the like. Such resilient sealing material 32 is preferably on at least both sides of any or all of inner sealing portion 36, intermediate portion 24, or flexible stopper 40. If desired to be applied only in localized areas of gasket 20, resilient sealing material 32 is applied in a variety of different ways, such as by (in example) screen printing, direct coating, or even decal transfer. In this regard, it should also be noted that concave side 44 of flexible stopper 40 can be merely coated (as in concave side 44 on stopper 40 shown in Figure 9) or partially or completely filled with resilient sealing material 32, either locally or as part of a larger or even an overall coating of carrier 24. In one form of the invention, the fluoroelastomer coating has a thickness of approximately 0.0002 inch to approximately 0.010 inch, although a much wider range of thicknesses can be used, as required or desirable in a particular application.

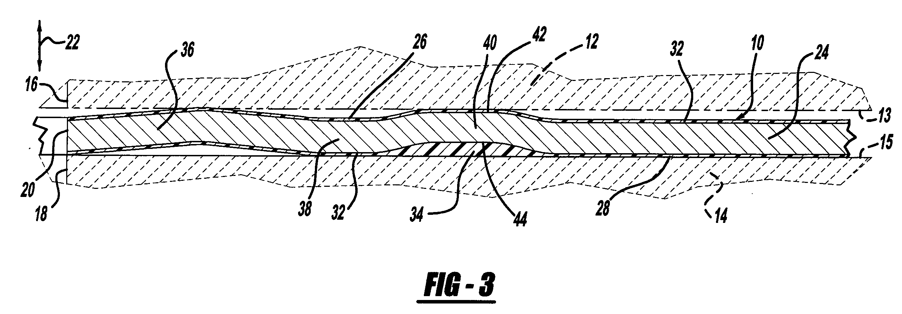

In Figure 3, gasket 10 is shown partially compressed between members 12 and 14. In this condition, as well as in other more fully compressed conditions, inner sealing portion 36 typically deflects first and provides the primary sealing about openings 16, 18 and 20. Flexible stopper 40, being typically less flexible than inner sealing portion 36, flexes to limit the amount of compression or deflection of inner sealing portion 36. This flexing preferably allows the gasket to provide more effective, repeatable and reliable sealing between members 12 and 14, especially during lower load conditions, such as those resulting from relative movement between members 12 and 14 due to compression, combustion, exhaust, or other varying pressures.

In one embodiment, the present invention provides machine components covered with a composition of this invention having differentiated regions. In this regard, in one embodiment, a first coating region without admixed microspheres is derived from a first admixture of the crosslinkable elastomer and a second coating region has dispersed microspheres derived from a second admixture of the crosslinkable elastomer. In one such embodiment, the amount of microspheres (for instance, at least 5 parts per hundred parts of crosslinkable elastomer) in the second region enable the second region to be "foamed" and yet smoothly interbonded with the first coating region with the cured continuous elastomer phase. The cured continuous elastomer phase (interbonding the first region and the second region) is derived from simultaneous curing of the crosslinkable elastomer in both regions. In this way, microspheres enable "foam in place" regions within an otherwise non-foamed coating, so that a designed coating is enabled for a component such as a gasket. At low loading points, the conformable foamed region facilitates an excellent seal; and, when complementarily positioned at high load points, the non-foamed regions of the coating minimize crush and load loss derived from creep and relaxation in the compressed gasket. The non-foamed region also functions as a load stopper for the foamed portion when the load is substantial. In another beneficial aspect, the foam region can be positioned to level and distribute the load on the gasket and thereby minimize undesirable crushing of other regions of the gasket (such as, for example, beaded portions).

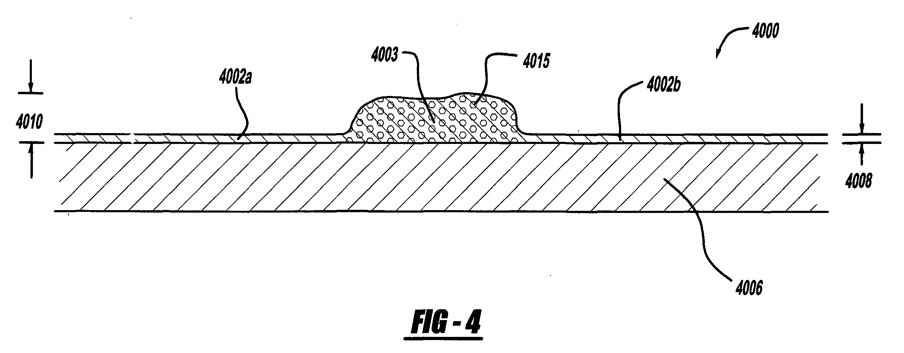

In further example of this, Figure 4 shows a simplified partial cross-sectional view of gasket embodiment 4000, taken along a position such as line 2-2 of Figure 1, but (to enable convenient focus on a particular gasket design feature used in conjunction with the fluoroelastomer coatings described herein) with a carrier 4006 that is generally flat and non-contoured. A first fluoroelastomer coating with relatively few microspheres is disposed onto carrier 4006 at regions 4002a and 4002b. One respective benefit of few microspheres in regions 4002a and 4002b is that the adhesion of regions 4002a and 4002b to a metal substrate will be superior to the adhesion of region 4003, especially for a metal having a high surface tension. However, region 4003, as interbonded with regions 4002a and 4002b, will be still be held in secure position from the adhesion of regions 4002a and 4002b.

A second fluoroelastomer admixture having essentially the same fluoroelastomer particulate base as the first coating, but with a large number of microspheres (see microsphere 4015), is disposed onto carrier 4006 at region 4003. After curing and expansion of the microspheres in region 4003, region 4003 provides a resilient "stopper" (reference stopper 40) portion in the gasket of raised thickness 4010 as compared to thickness 4008 of cured coating at regions 4002a and 4002b.

In one embodiment, the concentration of microspheres in the composition of gasket region 4003 is dependent upon the particular spring force desired when gasket 4000 is used. In this regard, when compressively interfaced to a second surface (as in Figure 3 where gasket 10 is shown partially compressed against surfaces of either of members 12 and 14 and flexible stopper 40 flexes to limit the amount of compression or deflection of inner sealing portion 36 due to compression), interface regions 4002a and 4002b are, in one embodiment, positioned at locations for compressively interfacing the sealing surface of gasket embodiment 4000 to a second surface (pressing against the upper surface of gasket 4000 from above gasket 4000) through, for example, use of mechanical fasteners (not shown, but which should be apparent). In such a compressive situation, the interfacing surface of region 4003 compressively interfaces to the second surface via coplanar mechanical compression derived from the compressive force exerted by the fasteners and also from inherent rigidity in the two mating components. As gasket 4000 is compressed, an internal resistive force equivalent to the compressive force will exist in compressed gasket 4000 (the opposing force exerted by a classic spring to a compressing force) at each point on gasket 4000. Under the presumption that the localized internal resistive (spring) force within gasket 4000 needs to be greatest at region 4003, the relative quantity of dispersed micro-spheres in region 4003 is that which provides, upon expansion of the micro-spheres and curing of the coating, a thickness 4010 which will be sufficiently greater than thickness 4008 to provide the desired localized internal resistive force maximum at region 4003.

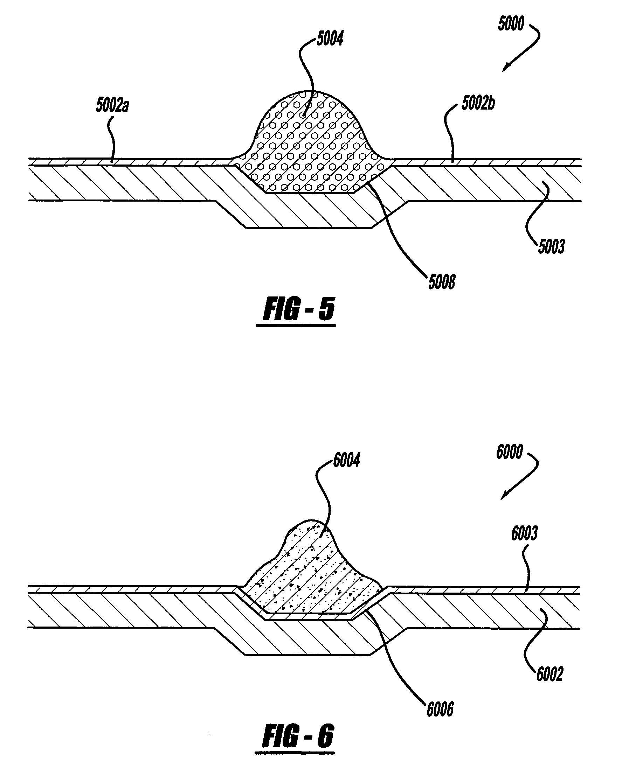

In a similar showing of an alternative feature in gasket embodiment 5000 in Figure 5, a "stopper" is provided in region 5004 which is laterally reinforced by generally concave surface portion 5008 of carrier 5003. In this regard, concave surface portion 5008 in (for example) a flexible metallic carrier 5003 provides an effective spring reinforcement of region 5004. As in Figure 4, a first fluoroelastomer coating with few microspheres is disposed onto carrier 5003 at regions 5002a and 5002b. A second fluoroelastomer having essentially the same fluoroelastomer particulate base as the first coating but with a large number of microspheres is disposed onto carrier 5003 to ultimately, after curing, provide region 5004. As should be appreciated, a gasket having a first surface for compressively interfacing to a second surface is therefore provided with elevated compressible foam above a recessed "spring" support region 5008, with elevated foam having an upper surface concave to the attachment surface of carrier 5003 and generally convex to the second surface.

It is to be noted that the first and second fluoroelastomer coatings of both embodiments 4000 and 5000 form, during curing, a crosslinked elastomer continuum among and throughout, respectively, regions 4002a, 4003, and 4002b and regions 5002a, 5004, and 5002b. This enhances strength and flexibility in the overall conjoined coatings to provide macroproperties in the gasket seal which benefit from the regionally differentiated properties respective to the compositionally differentiated regions.

Yet another feature in gasket construction is shown in gasket embodiment 6000 of Figure 6, where an essentially rigid "stopper" is provided in region 6004 which is laterally reinforced by generally concave surface portion 6006 of carrier 6002. A first fluoroelastomer coating is disposed onto carrier 6002 as coating region 6003. A second fluoroelastomer having essentially the same fluoroelastomer particulate base as the first coating but with ferric oxide (and, optionally, microspheres) is disposed onto coating region 6003 to ultimately, after curing, provide coating region 6004. The first and second fluoroelastomer coatings of regions 6004 and 6003 form, during curing, a crosslinked elastomer continuum (interbonding regions 6003 and 6004) with benefits as previously outlined. The ferric oxide buttresses the fluoroelastomer coating to provide the rigid region 6004 in the cured gasket seal. In the finished gasket, this region of the cured coating mechanically provides a stopper which is integral within the coating.

In an alternative embodiment of gasket embodiment 6000 of Figure 6, the material of region 6004 has a chemical base which is different from a fluoroelastomer but which will crosslink with fluoroelastomer coating 6003. In this regard, for example, region 6004 is, in one embodiment, a silicone polymer with a disbursed metal powder. In one embodiment, the silicone polymer resin is based upon blended diphyenyl polysiloxane silanol polymer and methylsiloxane polymer, where the diphyenyl polysiloxane silanol polymer is from about 45 to about 95 weight percent of the resin, and the methylsiloxane polymer is comparably from about 55 to about 5 weight percent of the resin. Aluminum particulate is dispersed in the resin in a quantity from about 30 to about 114 parts per 100 parts by weight of the silicone polymer, where the aluminum particulate has a maximum particle size passable through about 325 mesh. Zirconium acetate in a concentration from about 0.02 to about 0.5 weight percentage provides a curing catalyst for the silicone polymer blend.

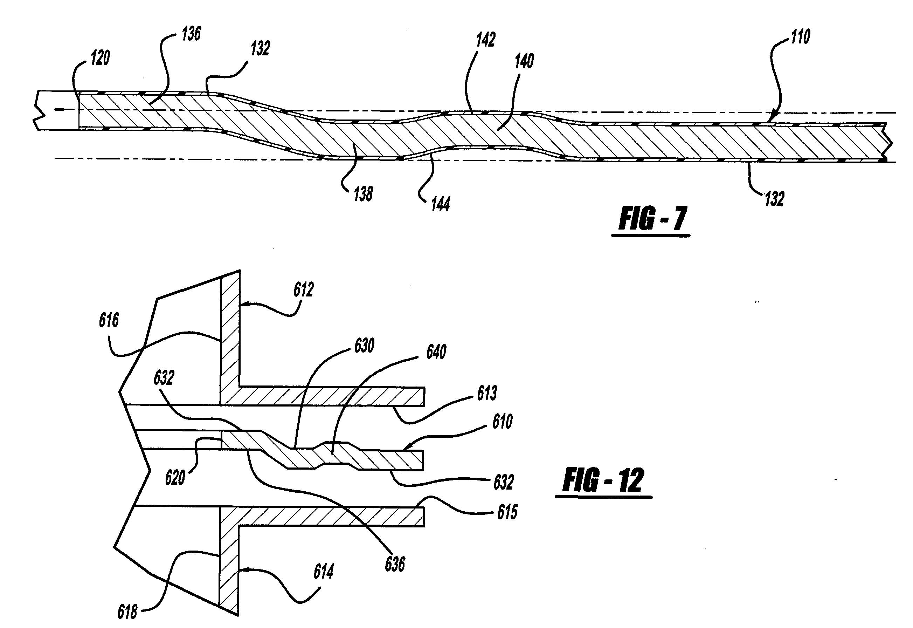

Figures 7 through 13 illustrate further alternate constructions or embodiments, with the reference numerals in Figures 7 through 12 indicating similar or corresponding elements to those of Figures 1 through 3, but with one-hundred through six-hundred prefixes, respectively.

Figure 7 shows a partial cross-sectional view of an alternate gasket according to the present invention, which is similar to the gasket of Figures 1 and 2, except that flexible stopper portion 140 is coated but not filled with resilient material on its concave side.

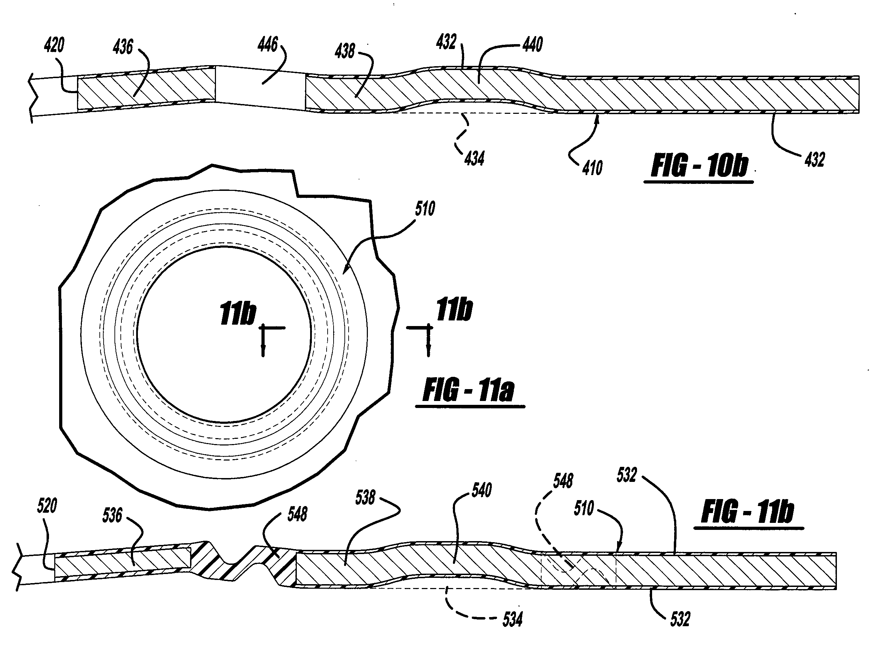

Figure 8 illustrates a gasket 210 and a generally serpentine flexible stopper 240, effectively forming a number of flexible stopper portions 240. In Figure 9, the inner sealing portion 336 is longitudinally offset in an inclined or angled direction. Figures 10a and 10b illustrate a separated inner sealing portion 436 interconnected with the remainder of gasket 410 and held in its proper position by one or more struts 446 of fluoroelastomer having expanded microspheres. Similarly, in Figures 11a and 11b, a separated inner sealing portion 536 is interconnected with the remainder of gasket 510 and held in its proper position by one or more "living hinge" portions 536 of resilient sealing material 532 of fluoroelastomer having expanded microspheres. It should be noted that this construction also allows for different thicknesses of inner sealing portion 536 and the remainder of gasket 510 (with either of them being thicker or thinner than the other) in order to obtain particular deformation of fluoroelastomer having expanded microspheres and load retention characteristics in a given application.

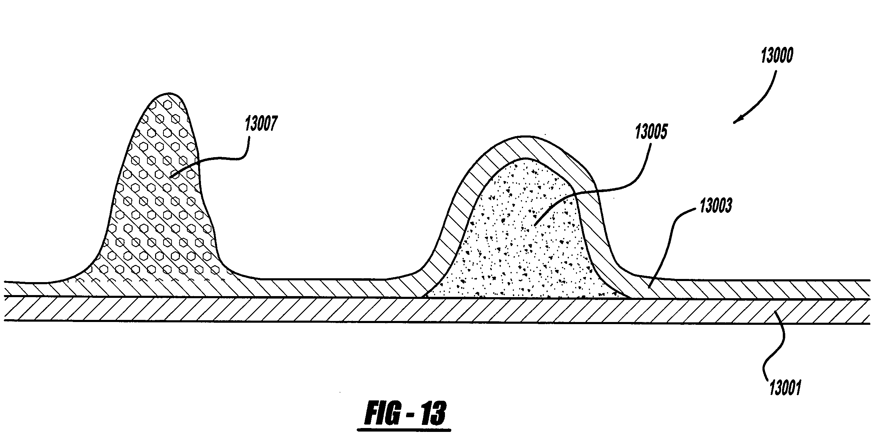

Figure 12 schematically illustrates, in conceptual form, the use of a gasket 610 according to the present invention in a wide variety of applications, with gasket 610 having any or any combination of the features, shapes or characteristics discussed above in connection with Figures 1 through 11. Members 612 can be flanges or other portions of any of numerous devices or structures, such as intake, exhaust or other manifolds, piping or other fluid-conveying devices, gas compression or other high pressure constructions, sealed housings or enclosures, or other sealing applications known to those skilled in the art. As mentioned above, the invention is especially advantageous where relative movement can occur between the members being sealed, such as that caused by thermal, mechanical or fluid conditions or environments presented by a particular applications.

Figure 13 shows a simplified partial cross-sectional view 13000 of a gasket carrier section 13001 with a cured fluoroelastomer coating having a microsphere enhanced region 13007 and a region without microsphere enhancement 13003, where an additional rigid region 13005 is encapsulated between the cured coating and the carrier so that the rigid region provides an elastomer-covered stopper portion in the gasket. Region 13005 is, in one embodiment, fluoroelastomer enhanced with powdered metal oxide as previously described; in an alternative embodiment, region 13005 is a silicone polymer with a disbursed metal powder as previously described.

Rigid region 13005 essentially provides a polymeric bead bonded to a portion of the surface of carrier section 13001. The remaining surface of region 13005 (free of bonding connection to the "upper" surface of carrier section 13001) rises to a maximum bead thickness - the greatest distance of the upper surface of rigid region 13005 above the upper surface of carrier 13001. Coating region 13003 has a bead enclosing portion bonded to this remaining exterior surface of polymeric bead 13005 so that polymeric bead 13005 is encapsulated within a peripheral boundary defined by the "upper" surface of carrier 13001 and the "lower surface" of the bead enclosing portion of coating region 13003. The thickness of coating region 13003 at the "crest" or highest point of region 13005 is referenced herein as the crest thickness. When rigid region 13005 and the portion of coating region 13003 covering rigid region 13005 are considered as a unified "bead" (metaphorically, a tough rigid core within a velvet coating), a second maximum bead thickness for the unified bead is therefore the sum of the maximum bead thickness and the crest thickness of region 13003. In this regard, the maximum thickness of region 13007 respective to the surface of carrier 13001 is preferably greater than this second maximum bead thickness (per visual comparison of the "high points" of region 13005 as covered by region 13003 and of region 13007). This provides, for example, a gasket in use when pressed against a consistently "horizontal" upper surface (not shown but which should be apparent) where region 13007 is, (a) compressed to seal against fluid (gas or liquid) passage while still (b) precluded from inappropriate compression and distortion by the greater rigidity of region 13005. Region 13005 also provides sealing efficacy in the form of a stopper function and second seal augmented by the moderate compressibility of coating 13003 at the crest of bead 13005.

Turning now to process considerations related to the production of the new materials and their use, fluoroelastomer particulate, inert particulate, metallic oxide reduction-agent particulate, wax, and, optionally, PTFE particulate and/or microspheres as previously described herein are admixed and conveyed to a mixer, such as a Banburry mixer, for mixing into pliable agglomerate. In one embodiment, the agglomerate is then fragmented into about 1 gram macro particulate. The macro particulate is then dissolved into an appropriate solvent (previously described herein) to form a stored coating elastomer precursor solution having a desired viscosity. The selected curing agent (in one embodiment in alcohol solution) is admixed into the elastomer precursor solution shortly before use (preferably within 48 hours) to make the coating admixture for application to a component.

The coating admixture is applied, in one embodiment of a process for using the coating admixture, to an essentially flat surface of a machine component (for example, a gasket). The component is then optionally further formed for final use. In a second embodiment, a component is first formed into a component not having a universally-flat surface of interest for coating (a component having a non-planar coating application surface); and the coating is then applied to the non-planar surface. In this regard, it has been learned that screen printing of coating admixtures onto the non-planar surface is especially facilitated by the use of a very fine screen for passing a finer granularity than at least 60 mesh, preferably about a 110 mesh printing screen, with multiple layers of the coating admixture being deposited (applied) and dried prior to curing as needed to enable a specific coating thickness. In this regard, the thickness of each layer deposited on the non-planar surface is controlled in thickness so that surface tension of the deposited layer on either the carrier or the previously dried layer is such that that flow of the deposited (wet) layer essentially is precluded (essentially does not occur) laterally along the surface of interest and that a consistently thick coating is built thereby over the surface of interest.

When the surface of the component to be coated is a metal, use of a primer such as, for instance, silane prior to coating enhances the bond between the cured coating and the component surface to which the coating is applied. When the surface to be coated is graphite, then the coating admixture is deposited on the graphite without benefit of a primer.

After the coating admixture has been applied to the component, the component and coating are heated to from about 380° to about 415° Fahrenheit as needed to expand any microspheres and to cure the coating.

### Example 1:

Example 1 prepared samples of a transmission separator plate gasket. A Banburry mixer is used to combine the ingredients of

| | |
|---|---|
| FKM terpolymer (Viton™ B) | 100 parts |
| Carbon Black MT990 | 30 |
| MgO | 10 |
| ZnO | 2 |
| CaCO₃ | 15 |
| CaO | 5 |
| Wax | 1 |
| unexpanded microspheres DU40 | 5 |

The agglomerate is then blended by a mill into a sheet-form compound and then cut into about 1 g chunks. A coating is prepared by dissolving and mixing the pieces into butyl cellulose acetate solvent by the weight ratio of 3:5 (solids vs. solvent). N,n'-dicinnamylidene-1,6-hexene curing agent was mixed in at a weight ratio of 1:23 over the above polymer solution just before applying the coating. A viscosity is measured on the final coating at around 100,000 centipoises by a Brookfield viscometer.

Screen printing is used to apply the coating selectively onto the desirable areas of a transmission separator plate. The plate is made of aluminum alloy and coated with a silane primer to promote adhesion of the coating. The screen printed part then is dried and cured, at 90° C and 390° C respectively, each for 15 minutes.

The cured elastomer bead is approximately 50 micrometers thick. The pencil hardness of the coating was 2H, and there is no failure upon bending around a mandrel having a diameter of 6 mm before and after 1500 hrs immersion in ATF (automatic transmission fluid) at 150° C. In an erosion test run up to 12 hours, no free elastomer material or delamination was observed. In this erosion test, the coating was impinged by the hot ATF (automatic transmission fluid at 125° C) at 2 MPa. The acceptance criteria for this application is that the final gasket pass 2 hours of test with no failure.

### Example 2

Example 2 prepared 2 samples of a metal cylinder head gasket. The same method as in Example 1 is used to make coatings A and B except for the minor composition changes as noted in the ingredient table:

| | A | B |
|---|---|---|
| FKM terpolymer (Viton™ B) | 100 parts | 100 parts |
| Carbon Black MT990 | 30 | |
| MgO | 15 | 30 |
| ZnO | 2 | 2 |
| CaCO₃ | 15 | 30 |
| CaO | 5 | |
| PTFE | 5 | 5 |
| Fe₂O₃ | | 30 |
| Wax | 5 | 5 |
| unexpanded microspheres DU202 | | |

A similar process to Example 1 is used to make coated single layer cylinder head gasket samples. Some differences from Example 1 are: The gasket is made of stainless steel and is a stamped part with embossment as shown in Figure 2; and, to provide an even thickness of coating along the embossment, a 110 mesh screen is used. After coating A, which covers most of the embossment area, dried, coating B is applied into the groove using a different screen, on top of a portion of coating A (reference element 34 in Figure 3).

The cured elastomer film in areas other than the groove is about 20 micrometers, with a pencil hardness of 4H. The coated single layer gasket passes 100 hours of deep thermal shock engine dynamometer testing. In the test, the engine is run at wide open throttle and at full power for 30 minutes, quickly quenched by chilled coolant, and then soaked for another 30 minutes. During the cycle, the coolant temperature varied from 105° C to -30° C. The test simulated extremes of conditions encountered in cylinder head gasket applications. At disassembly after the test, the coating retains integrity and conformability.

### Example 3

Example 3 prepared samples of bipolar plate gaskets for a fuel cell. Ingredients of the composition for the gasket samples are listed below. The method of preparation and application of the coating is similar to Examples 1 and 2 except for no primer is used for the bipolar plate (as made of a graphite composite). The coating is used for sealing and for electrical insulation. Testing shows that the FKM coating seals air under 10 Ib/in² load and provided sufficient insulation function with a 150 micrometer thick cured film.

| | |
|---|---|
| FKM terpolymer (Viton™ B) | 100 parts |
| Carbon Black MT990 | 30 |
| MgO (Maglite™ Y) | 10 |
| Wax | 1.2 |
| PTFE | 50 |

The examples and other embodiments described herein are exemplary and not intended to be limiting in describing the full scope of compositions and methods of this invention. Equivalent changes, modifications and variations of specific embodiments, materials, compositions and methods may be made within the scope of the present invention, with substantially similar results.

## Claims

1. A coating admixture, comprising:
(a) fluoroelastomer particulate derived from vinylidene-fluoride, hexafluoropropene, and tetrafluoroethylene, said fluoroelastomer having a Mooney viscosity from about 25 to about 75, fluorine from about 65 to about 69 atomic weight percent, at least 90 weight percent fluoroterpolymer, and halogenated crosslink sites;
(b) inert particulate from about 10 to about 50 parts per 100 parts by weight of said fluoroelastomer particulate, said inert particulate having particle sizes less than about 250 mesh;
(c) curing agent from about 0.5 to about 20 parts per 100 parts by weight of said fluoroelastomer particulate, wherein said curing agent crosslinks said fluoroelastomer particulate to generate cured fluoroelastomer and hydrogen ions; and
(d) metallic oxide reduction-agent particulate from about 5 to about 50 parts per 100 parts by weight of said fluoroelastomer particulate, said metallic oxide reduction-agent particulate having particle sizes less than about 250 mesh and a BET surface area from about 40 to about 70 square meters per gram.

2. A coating admixture according to Claim 1, further comprising polytetrafluorinated ethylene particulate of less than about 75 parts per 100 parts by weight of said fluoroelastomer particulate, said polytetrafluorinated ethylene particulate having a mean particle size from about 10 to about 50 microns.

3. A coating admixture according to Claim 1, further comprising a powdered metallic oxide selected from the group consisting of ferric oxide, titanium dioxide, and a mixture thereof, said powdered metallic oxide at a level of from about 5 to about 25 parts per 100 parts by weight of said fluoroelastomer particulate.

4. A coating admixture according to Claim 1, further comprising microspheres, at a level of from about 0.5 to about 20 parts per 100 parts by weight of said fluoroelastomer particulate.

5. A coating admixture according to Claim 1, further comprising a wax particulate in from about 0.05 parts to about 5 parts per 100 parts by weight of said fluoroelastomer particulate.

6. A coating admixture according to Claim 1, wherein said inert particulate is selected from the group consisting of calcium carbonate, carbon black, graphite, fumed silica, and kaolin and mixtures thereof.

7. A coating admixture according to Claim 1, wherein said curing agent comprises an amine.

8. A coating admixture according to Claim 7, wherein said amine curing agent is selected from the group consisting of n,n'-dicinnamylidene-1,6-hexene, hexamethylene diamine carbamate, ethylene diamine carbamate, and combinations thereof.

9. A coating admixture according to Claim 1, wherein said metallic oxide reduction-agent particulate comprises MgO from about 1 to about 30 parts per 100 parts by weight of said fluoroelastomer particulate.

10. A coating admixture according to Claim 9, wherein said metallic oxide reduction-agent particulate comprises ZnO from about 1 to about 20 parts per 100 parts by weight of said fluoroelastomer particulate.

11. A coating admixture according to Claim 1, further comprising solvent sufficient to provide an admixture viscosity from about 10,000 centipoises to about 500,000 centipoises.

12. A coating admixture according to Claim 11, wherein said solvent comprises a ketone, alcohol, or ester solvent or a mixture thereof.

13. A coating admixture according to Claim 12, wherein said solvent is selected from the group consisting of methyl isobutyl ketone, ethyl acetate, cellosolve acetate, sorbitol acetate, 3,5,5-trimethyl-3-cyclohexenene-1-one, cyclohexene-1-one, butyl cellulose acetate, ethanol, methanol, isopropanol, or a mixture thereof.

14. A coating admixture according to Claim 13, wherein said solvent comprises a blend of about 20 weight percent 3,5,5-trimethyl-3-cyclohexenene-1-one, about 20 weight percent cyclohexene-1-one, and about 60 weight percent butyl cellulose acetate.

15. A coating admixture according to Claim 1 wherein said inert particulate is carbon black, said curing agent is n,n'-dicinnamylidene-1,6-hexene, said reduction agent comprises MgO from about 1 to about 30 parts per 100 parts by weight of said fluoroelastomer particulate and a remainder of ZnO from about 1 to about 20 parts per 100 parts by weight of said fluoroelastomer particulate, and said admixing further comprises admixing:
(e) polytetrafluorinated ethylene particulate of less than about 75 parts per 100 parts by weight of said fluoroelastomer particulate, said polytetrafluorinated ethylene particulate having a mean particle size from about 10 to about 50 microns;
(f) wax particulate of from about 0.05 parts to about 5 parts per 100 parts by weight of said fluoroelastomer particulate; and
(g) solvent sufficient to provide an admixture viscosity from about 10,000 centipoises to about 500,000 centipoises, wherein said solvent comprises a blend of about 20 weight percent 3,5,5-trimethyl-3-cyclohexenene-1-one, about 20 weight percent cyclohexene-1-one, and about 60 weight percent butyl cellulose acetate.

16. A coating admixture according to Claim 15 wherein said carbon black is about 35 parts per 100 parts by weight of said fluoroelastomer particulate, said polytetrafluorinated ethylene particulate is about 5 parts per 100 parts by weight of said fluoroelastomer particulate, said n,n'-dicinnamylidene-1,6-hexene is about 8 parts per 100 parts by weight of said fluoroelastomer particulate, said MgO is about 9 parts per 100 parts by weight of said fluoroelastomer particulate, and said ZnO is about 10 parts per 100 parts by weight of said fluoroelastomer particulate.

17. A coating admixture according to Claim 15, further comprising a powdered metallic oxide selected from the group consisting of ferric oxide, titanium dioxide, and a mixture thereof, said powdered metallic oxide at a level of from about 5 to about 25 parts per 100 parts by weight of said fluoroelastomer particulate.

18. A coating admixture according to Claim 15, further comprising microspheres, said microspheres about 8 parts per 100 parts by weight of said fluoroelastomer particulate.

19. A coating admixture according to Claim 16, further comprising a powdered metallic oxide selected from the group consisting of ferric oxide, titanium dioxide, and a mixture thereof, said powdered metallic oxide at a level of from about 5 to about 25 parts per 100 parts by weight of said fluoroelastomer particulate.

20. A coating admixture according to Claim 16, further comprising microspheres, said microspheres about 8 parts per 100 parts by weight of said fluoroelastomer particulate.

21. A coating admixture according to Claim 19, further comprising microspheres, said microspheres about 8 parts per 100 parts by weight of said fluoroelastomer particulate.

22. A machine component covered with a cured coating applied to a surface of said component, said cured coating having a cured continuous elastomer phase derived from dispersed crosslinkable elastomer, said component comprising:
(a) a first coating region in said cured coating derived from a first admixture of said crosslinkable elastomer, said first coating region having a first coating thickness respective to said surface; and
(b) a second coating region in said cured coating derived from a second admixture of microspheres and said crosslinkable elastomer, said second coating region interbonded with said first coating region with said cured continuous elastomer phase, said second coating region having a second coating thickness respective to said surface which is greater than first coating thickness, said second coating admixture having dispersed microspheres;
wherein said cured continuous elastomer phase interbonding said first region and said second region is derived from simultaneous curing of said crosslinkable elastomer in both said regions.

23. A machine component according to Claim 22 wherein cured coating is derived from a coating admixture, comprising:
(1) fluoroelastomer particulate derived from vinylidene-fluoride, hexafluoropropene, and tetrafluoroethylene, said fluoroelastomer having a Mooney viscosity from about 25 to about 75, fluorine from about 65 to about 69 atomic weight percent, at least 90 weight percent fluoroterpolymer, and halogenated crosslink sites;
(2) inert particulate from about 10 to about 50 parts per 100 parts by weight of said fluoroelastomer particulate, said inert particulate having particle sizes less than about 250 mesh;
(3) curing agent from about 0.5 to about 20 parts per 100 parts by weight of said fluoroelastomer particulate, wherein said curing agent crosslinks said fluoroelastomer particulate to generate cured fluoroelastomer and hydrogen ions; and
(4) metallic oxide reduction-agent particulate from about 5 to about 50 parts per 100 parts by weight of said fluoroelastomer particulate, said metallic oxide reduction-agent particulate having particle sizes less than about 250 mesh and a BET surface area from about 40 to about 70 square meters per gram.

24. A machine component according to Claim 22 wherein said machine component is a head gasket for an internal combustion engine.

25. A machine component according to Claim 23 wherein said machine component is a head gasket for an internal combustion engine.

26. A machine component according to Claim 22 having a recessed portion in said component surface, said recessed portion positioned at a location for compressively interfacing said component to a second component, wherein said second coating region fills said recessed portion and said second admixture has a sufficient quantity of said microspheres for providing, upon expansion of said microspheres and curing of said second region coating, an elevated compressible foam above said recessed portion, said elevated foam having an upper foam surface extending, respective to said component surface, above said first coating thickness to be generally concave to said component surface.

27. A machine component according to Claim 23 having a recessed portion in said component surface, said recessed portion positioned at a location for compressively interfacing said component to a second component, wherein said second coating region fills said recessed portion and said second admixture has a sufficient quantity of said micro-spheres for providing, upon expansion of said micro-spheres and curing of said second region coating, an elevated compressible foam above said recessed portion, said elevated foam having an upper foam surface extending, respective to said component surface, above said first coating thickness to be generally concave to said component surface.

28. A machine component according to Claim 26 wherein said machine component is a head gasket for an internal combustion engine.

29. A machine component according to Claim 27 wherein said machine component is a head gasket for an internal combustion engine.

30. A machine component according to Claim 22 wherein a plurality of said first coating regions are in said cured coating, said first regions positioned at locations for compressively interfacing said machine component to a second component through use of at least one mechanical fastener connected in each first coating region; and at least one said second coating region is in said coating, each second coating region positioned for compressively interfacing said machine component to said second component via coplanar mechanical compression derived from said fasteners, wherein said second admixture has a sufficient quantity of said micro-spheres for providing, upon expansion of said micro-spheres and curing of said second coating region, an elevated compressible foam with a thickness enabling a compressive seal between said second coating region and said second component.

31. A machine component according to Claim 23, further comprising:
(c) a plurality of said first coating regions in said cured coating, said first regions positioned at locations for compressively interfacing said machine component to a second component through use of at least one mechanical fastener connected in each first coating region; and
(d) at least one said second coating region in said coating, each second coating region positioned for compressively interfacing said machine component to said second component via coplanar mechanical compression derived from said fasteners, wherein said second admixture has a sufficient quantity of said micro-spheres for providing, upon expansion of said micro-spheres and curing of said second coating region, an elevated compressible foam with a thickness enabling a compressive seal between said second coating region and said second component.

32. A machine component according to Claim 30 wherein said machine component is a head gasket for an internal combustion engine.

33. A machine component according to Claim 31 wherein said machine component is a head gasket for an internal combustion engine.

34. A gasket, comprising:
(a) an essentially rigid carrier; and
(b) a cured coating applied to at least one surface of said carrier, said coating cured from a coating admixture of:
(1) fluoroelastomer particulate derived from vinylidene-fluoride, hexafluoropropene, and tetrafluoroethylene, said fluoroelastomer having a Mooney viscosity from about 25 to about 75, fluorine from about 65 to about 69 atomic weight percent, at least 90 weight percent fluoroterpolymer, and halogenated crosslink sites;
(2) inert particulate from about 10 to about 50 parts per 100 parts by weight of said fluoroelastomer particulate, said inert particulate having particle sizes less than about 250 mesh;
(3) curing agent from about 0.5 to about 20 parts per 100 parts by weight of said fluoroelastomer particulate, wherein said curing agent crosslinks said fluoroelastomer particulate to generate cured fluoroelastomer and hydrogen ions; and
(4) metallic oxide reduction-agent particulate from about 5 to about 50 parts per 100 parts by weight of said fluoroelastomer particulate, said metallic oxide reduction-agent particulate having particle sizes less than about 250 mesh and a BET surface area from about 40 to about 70 square meters per gram.

35. A gasket according to Claim 34 wherein said admixture further comprises polytetrafluorinated ethylene particulate of less than about 75 parts per 100 parts by weight of said fluoroelastomer particulate, said polytetrafluorinated ethylene particulate having a mean particle size from about 10 to about 50 microns.

36. A gasket according to Claim 34 wherein said admixture further comprises a powdered metallic oxide selected from the group consisting of ferric oxide, titanium dioxide, and a mixture thereof, said powdered metallic oxide at a level of from about 5 to about 25 parts per 100 parts by weight of said fluoroelastomer particulate.

37. A gasket according to Claim 34 wherein said admixture further comprises microspheres, said microspheres from about 0.5 to about 20 parts per 100 parts by weight of said fluoroelastomer particulate.

38. A gasket according to Claim 34 wherein said admixture further comprises a wax particulate, said wax particulate from about .05 parts to about 5 parts per 100 parts by weight of said fluoroelastomer particulate.

39. A gasket according to Claim 34 wherein said admixture further comprises solvent sufficient to provide an admixture viscosity from about 10,000 centipoises to about 500,000 centipoises.

40. A gasket according to Claim 34 wherein said inert particulate is carbon black, said curing agent is n,n'-dicinnamylidene-1,6-hexene, said reduction agent comprises MgO from about 1 to about 30 parts per 100 parts by weight of said fluoroelastomer particulate and a remainder of ZnO from about 1 to about 20 parts per 100 parts by weight of said fluoroelastomer particulate, and said admixing further comprises admixing:
(5) polytetrafluorinated ethylene particulate of less than about 75 parts per 100 parts by weight of said fluoroelastomer particulate, said polytetrafluorinated ethylene particulate having a mean particle size from about 10 to about 50 microns;
(6) wax particulate of from about .05 parts to about 5 parts per 100 parts by weight of said fluoroelastomer particulate; and
(7) solvent sufficient to provide an admixture viscosity from about 10,000 centipoises to about 500,000 centipoises, wherein said solvent comprises a blend of about 20 weight percent 3,5,5-trimethyl-3-cyclohexenene-1-one, about 20 weight percent cyclohexene-1-one, and about 60 weight percent butyl cellulose acetate.

41. A gasket, comprising:
(a) an essentially rigid carrier; and
(b) a cured coating applied to at least one surface of said carrier, said coating cured having a cured continuous elastomer phase derived from dispersed crosslinkable elastomer, said cured coating having:
(1) a first coating region in said cured coating derived from a first admixture of said crosslinkable elastomer, said first coating region having a first coating thickness respective to said surface; and
(2) a second coating region in said cured coating derived from a second admixture of microspheres and said crosslinkable elastomer, said second coating region interbonded with said first coating region with said cured continuous elastomer phase, said second coating region having second coating thickness respective to said surface which is greater than first coating thickness, said second coating admixture having dispersed microspheres;
wherein said cured continuous elastomer phase interbonding said first region and said second region is derived from simultaneous curing of said crosslinkable elastomer in both said regions.

42. A gasket according to Claim 41 wherein cured coating is derived from a coating admixture, comprising:
(1) fluoroelastomer particulate derived from vinylidene-fluoride, hexafluoroproplene, and tetrafluoroethylene, said fluoroelastomer having a Mooney viscosity from about 25 to about 75, fluorine from about 65 to about 69 atomic weight percent, at least 90 weight percent fluoroterpolymer, and halogenated crosslink sites;
(2) inert particulate from about 10 to about 50 parts per 100 parts by weight of said fluoroelastomer particulate, said inert particulate having particle sizes less than about 250 mesh;
(3) curing agent from about 0.5 to about 20 parts per 100 parts by weight of said fluoroelastomer particulate, wherein said curing agent crosslinks said fluoroelastomer particulate to generate cured fluoroelastomer and hydrogen ions; and
(4) metallic oxide reduction-agent particulate from about 5 to about 50 parts per 100 parts by weight of said fluoroelastomer particulate, said metallic oxide reduction-agent particulate having particle sizes less than about 250 mesh and a BET surface area from about 40 to about 70 square meters per gram.

43. A gasket according to Claim 41 wherein said gasket is a head gasket for an internal combustion engine.

44. A gasket according to Claim 41 having a recessed portion in said surface, said recessed portion positioned at a location for compressively interfacing said gasket to a component, wherein said second coating region fills said recessed portion and said second admixture has a sufficient quantity of said micro-spheres for providing, upon expansion of said micro-spheres and curing of said second region coating, an elevated compressible foam above said recessed portion, said elevated foam having an upper foam surface extending, respective to said surface, above said first coating thickness to be generally concave to said surface.

45. A gasket according to Claim 44 wherein said gasket is a head gasket for an internal combustion engine.

46. A gasket according to Claim 41 wherein a plurality of said first coating regions are in said cured coating, said first regions positioned at locations for compressively interfacing said gasket between two components through use of at least one mechanical fastener connected in each first coating region; and each said second coating region is positioned for compressively interfacing said gasket to said components via coplanar mechanical compression derived from said fasteners, wherein said second admixture has a sufficient quantity of said micro-spheres for providing, upon expansion of said micro-spheres and curing of said second coating region, an elevated compressible foam with a thickness enabling a compressive seal between said second coating region and one of said components.

47. A gasket according to Claim 46 wherein said gasket is a head gasket for an internal combustion engine.

48. A method for making a gasket, comprising:
(a) admixing a fluoroelastomer coating admixture;
(b) applying said admixture through a very fine screen to coat an essentially rigid metal carrier having a non-planar surface with a layer of said admixture, said layer having a thickness controlled to essentially preclude flow of admixture laterally along said surface;
(c) drying said admixture;
(d) repeating said printing and drying steps until a desired thickness of a plurality of said dried admixture layers is achieved; and
(e) curing said dried admixture layers simultaneously.

49. A method according to Claim 48 wherein said applying uses screen printing.

50. A method according to Claim 49 wherein said screen has a mesh which will pass particles of no greater size than 110 mesh.

51. A method according to Claim 48 wherein said fluoroelastomer is admixed from:
(1) fluoroelastomer particulate derived from vinylidene-fluoride, hexafluoropropene, and tetrafluoroethylene, said fluoroelastomer having a Mooney viscosity from about 25 to about 75, fluorine from about 65 to about 69 atomic weight percent, at least 90 weight percent fluoroterpolymer, and halogenated crosslink sites;
(2) inert particulate from about 10 to about 50 parts per 100 parts by weight of said fluoroelastomer particulate, said inert particulate having particle sizes less than about 250 mesh;
(3) curing agent from about 0.5 to about 20 parts per 100 parts by weight of said fluoroelastomer particulate, wherein said curing agent crosslinks said fluoroelastomer particulate to generate cured fluoroelastomer and hydrogen ions; and
(4) metallic oxide reduction-agent particulate from about 5 to about 50 parts per 100 parts by weight of said fluoroelastomer particulate, said metallic oxide reduction-agent particulate having particle sizes less than about 250 mesh and a BET surface area from about 40 to about 70 square meters per gram.

52. A machine component covered with a cured coating applied to a surface of said component, said cured coating having a cured continuous elastomer phase derived from dispersed crosslinkable elastomer, said component comprising:
(a) a polymeric bead bonded to a portion of said component surface, said polymeric bead having a concentration of from about 5 to about 25 parts per 100 parts by weight of reinforcing particulate selected from the group consisting of metallic particulate, metallic oxide particulate, and combinations thereof wherein said bead has a first surface bonded to said component surface, a second surface free of bonding connection to said component surface, and a first maximum bead thickness respective to said component surface;
(b) a first coating region in said cured coating derived from a first admixture of said crosslinkable elastomer, said first coating region having a portion bonded to said surface with a first coating thickness respective to said surface, said first coating region having a bead enclosing portion bonded to said second surface of said polymeric bead so that said polymeric bead is encapsulated within a peripheral boundary defined by said component surface and said bead enclosing portion of said first coating region, said first coating having a crest thickness at said first maximum bead thickness, and said encapsulated polymeric bead and said bead enclosing portion of said first coating region defining a second maximum bead thickness as a sum of said first maximum bead thickness and said crest thickness; and
(c) a second coating region in said cured coating derived from a second admixture of microspheres and said crosslinkable elastomer, said second coating admixture having dispersed microspheres, said second coating region interbonded with said first coating region with said cured continuous elastomer phase;
wherein said second coating region has a maximum second coating thickness respective to said surface which is greater than said second maximum bead thickness, and wherein said cured continuous elastomer phase interbonding said first region and said second region is derived from simultaneous curing of said crosslinkable elastomer in both said regions.
